# EUROPEAN PATENT APPLICATION

(11) **EP 2 404 492 A2**
(43) Date of publication of application: **11.01.2012**
(21) Application number: 10164278.3
(22) Date of filing: 28.05.2010
(51) Int. Cl.: A01B 39/16

(54) **Agricultural machine**

(30) Priority: 28.05.2009 IT MN20090015
(71) Applicant: Guerrieri Gonzaga, Edoardo, 46030 Sustinente (Mantova) (IT); Guerrieri Gonzaga, Aliana, 20129 Milano (IT)
(72) Inventor: Guerrieri Gonzaga, Edoardo, 46030, Sustinente (Mantova) (IT)
(74) Representative: Gustorf, Gerhard

(57) **Abstract**

Compact multi-function device composed of a lifting central body (platform) supporting on its sides two side frame members which can be widened/narrowed if needed even when in operation. The side frame members are equipped with several motorized operating units arranged in sequence and suitable to carry out all or part of the operations related to cleaning, weeding, fertilization, soil ploughing in and hoeing on ground strips at the foot of plant rows, particularly vineyards, as well as possible defence operations. The device can be fitted to the lifting groups of tractors driven by operators or of other self-moving vehicles, even with robotized drive, working on the two sides while moving through the plant row. The operating units are driven by motors even of different type, such as oleo-dynamic and/or electric motors. The correct way to be followed by the vehicle is determined by the operator or, in case of more advanced solutions, is controlled automatically thanks to remote controlled or self-driven ways. The positioning of the side frame members is automatic, assured by plant row trunks proximity detectors.

## Description

This invention refers to a multi-function agricultural device as per the introduction of claim 1.

The device subject of this invention is preferably of a double-row type and is suitable to carry out several operations over the plant row width, such as cleaning the row foot from residues, fertilization and/or pest control, as well the low depth tilling on pre-set strips of preferably grassed over plant rows, close to the foot of rows of vineyards, orchards, tree nurseries and hedges, even very thick ones. According to the invention, the device is composed of a central platform which can be fitted onto the front, central or rear lifting group of tractors or other self-moving vehicles driving through the plant row, incorporates at least two opposite parallel and transversal double-effect hydraulic jacks and is equipped with heads ending with standard-type plates on which similar plates of two longitudinal frames (left and right side frame members) are bolted. The two side frame members are preferably of a single beam type, can be widened and narrowed and are equipped with several removable units lined up in a functional sequence and suitable to simultaneously carry out the aforesaid operations. The device is also equipped with at least one reservoir with mechanized proportioning and distributing unit of granulated products, pellets or other solid products to be spread on the soil fitted onto the central platform; as an alternative the device can be equipped with two reservoirs, each one fitted onto a side frame member, and having in any case duly motorized spreaders.

The operating units are duly fitted onto the side frame members, are removable and lined-up in a functional sequence. The units are independently motorized even thanks to different solutions (for ex. mechanic drive from the tractor power take-off, or thanks to the contact of a spurred wheel with the ground while moving forward, or by means of either oleo-dynamic motor/s or electric motor).

Besides the working width can vary also while in motion in order to avoid obstacles or damages to misaligned or protruding plant stubs or trunks; such variation is handled by the operator or preferably automatically thanks to a GPS system or to trunk proximity detectors duly controlled by an electronic cabinet which sends the inputs to the jacks.

At present the above operations are carried out during several different interventions and often each one on a single side of the plant row, thus resulting in a waste of valuable time, as they are carried out under variable soil conditions in the late autumn or early spring, and in high costs.

The invention proposed permits to carry out all the above operations in a single row driving through with consequent savings in terms of time and costs and reduction of trampling on the ground; besides, thanks to the ploughing of the distributed products in the soil, it permits to oxygenate the soil and to get a uniform and sod-less surface finishing.

The structure of the device calls for two opposite and parallel hydraulic jacks in the central platform which support and independently adjust the width of two duly shaped side frame members, supported by a wheel laying on the ground, having a variable height and placed in an intermediate position between the brushing and hoeing units and the device itself. The wheel balances on the tractor lifting device in order to permit, given the same height of the wheel, to have a heavier load on the unit ahead of the wheel, on the hoeing unit behind.

The functional sequence of the operating units, which can in any case be independently positioned both transversally and in height, calls for the following:
a) the cleaning of the row foot obtained preferably thanks to a rotating disc with a basically horizontal axis, but duly inclined with respect to the plant row and having an external band wide enough to contain flexible whips arranged on several rims (ranks) on a continuous basis or gathered in transversal groups, capable to move residues and removed weeds towards the centre of the plant row strip and driven by an oleo-dynamic or electric motor, preferably of the variable speed type;
b) a centrifugal electric fan with the air exit directed towards the plant row suitable to remove leaves and residues stuck to the ground ahead of or behind the brushing unit;
c) a supporting pivoting or oriented free wheel, the height of which can be adjusted manually or thanks to a hydraulic jack, capable to follow the position of the tractor lifting group;
d) disc-type static distributor of the product coming from the reservoir;
e) soil hoeing unit having a working width equal to the pre-set strip; it completes the mechanical weed killing, ploughs in the product, airs the soil and is composed of a hoe-holding horizontal axis hub, a boot-shaped case that takes and transfers by means of a chain the motion drive from an upper hub fixed onto the side frame member, with a similar solution as the one of the row strips hoeing units, driven directly by an oleo-dynamic motor, or by an extractable transversal duly shaped shaft, in common with the hoeing unit of the other side frame member, that takes its motion, thanks to a T-shaped gear reduction group, from an oleo-dynamic motor fixed underneath the central platform; as an alternative it can be mechanically operated by the tractor power take-off thanks to a universal shaft. The hoeing unit can be preceded by fixed tools suitable to make cuttings into the ground in order to facilitate the job for the rotating hoes in case of dry soils;
f) lifting group preferably of the balancing type thanks to the action of double-effect hydraulic jack/s driven by the operator, as mentioned above, in order to balance the reciprocal position between the brushing and hoeing units depending on the ground conditions.

The fertilizer reservoir, along with its quantity proportioning unit, can be housed on the side frame member and is preferably operated, thanks to a chain, by a spurred wheel fitted to the side frame member and then put in contact with the ground when the lifting group is lowered and is ready to move forward; as an alternative, the reservoir and the relevant operating kinematic mechanism can be a single group, fitted in a central position with respect to the platform and equipped with two proportioning units feeding the distributing discs fitted on the side frame members by means of flexible pipes and/or Archimedean screws.

Another feature of this invention is the possibility for the operator to pre-set and obtain, thanks to the hydraulic jacks, the "standard" working width, as well as the acceptable tolerance limit before temporarily correcting the position of the RT or LF side frame members, because of deviations or plant trunk misalignments, of obstacles or deviations from the ideal driving line.

The "standard" working width and the acceptable "tolerance limit" before any intervention are pre-set by the operator depending on the geometrical features of the vineyard (for ex. the row strip width), whereas the temporary variations, i.e. the narrowing and repositioning of the side frame members while in motion can be decided at sight by the operator and controlled independently (RT and/or LF) by hydraulic distributors. The preferred automatic version calls for signals coming from sensors (of the mechanical, optical, ultrasound type, etc), which detect the distance of each side frame member from the trunks only when the deviation exceeds the "limit"; such signals, which are processed by a dedicated electronic cabinet, are transformed into inputs to the actuators controlling the narrowing and repositioning of the side members. Given that the device moves forward at a relatively low speed, as it depends on the hoeing unit, the detectors can also be placed onto the side frame members themselves, but must be fitted onto supports located in a forward position proportionate to the time required for the "narrowing" of the side frame members by the foreseeable 5-10 cm. The return to the "normal" position, when signalling stops, is also preferably automated. In parallel with the intervention the operator gets a signal on a display, which is preferably dynamically selected and stored by a dedicated trunk meter (for ex. the signal detection over the last ten trunks).

Figures from 1 to 4 in the attached table show as a propaedeutic and non limiting example an application of the device to front lifting device of a tractor.

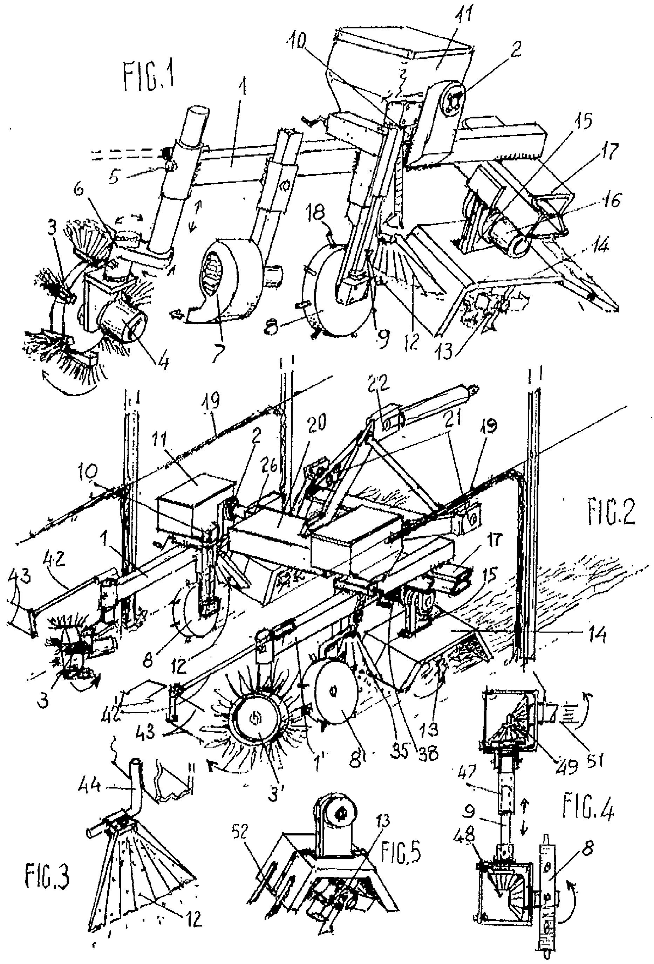

In Fig. 1, showing a view from the inside of the RT side frame member, the following can be seen: the single beam side frame member 1 with the standard plate for fixing 2 to the central frame 20 (see figure 2), the first brushing unit 3 driven by the oleo-dynamic motor 4 and adjustable in height, fitted onto the side frame 1 with a bolt of the round section coupling 5 and adjustable in terms of direction and distance as it is included in a second tubular support which can be fixed with a bolt onto the coupling 6. The second unit is composed of the centrifugal fan 7 suitable for the plant row cleaning thanks to an air flow oriented towards the ground, which is also adjustable in terms of height and direction. This unit is followed by the wheel 8 supporting the side frame member 1 and adjustable in height, equipped with spurs 18 ensuring motion transmission thanks to conic couples and an extractable shaft 9. The proportioning unit 10 of the reservoir 11 pours the fertilizer on the disc underneath 12 that spreads it over the soil. The device then calls for the hoeing unit 13 equipped with replaceable and selection elements according to the ground strip width. The hoeing unit 13 is housed into the protective covering 14, fitted onto the device with an oscillating boot-shaped cover 15 and, in this version, driven, thanks to a chain, by its own oleo-dynamic motor 16; the unit is duly fitted so as to be adjustable onto an omega-shaped beam section 17 (sealed to the side frame member), which permits its adequate transversal positioning.

Fig. 2 shows the device in operation on two vineyard rows as 19 shown in axonometry excluding the tractor, the front lifting group, the oil pipes and the electric cables. The following can be seen: the central frame 20 with the arms 21 and 22 to anchor the same to the tractor front lifting group. The side frame members 1 (RT) and 1' (LF) are fixed by means of bolts to the standard-type plates 2 of the opposite parallel double-effect hydraulic jacks as per item 26 (RT) housed into the rectangular section guides of the main frame 20. The figure also shows the front brushing units 3 (RT) and 3' (LF), equipped with several rims of elements being a sort of semirigid whips 23 arranged in several ranks on a continuous basis, the right one being featured by a discontinuous arrangement in order to facilitate the removal of residues, as well as its self-cleaning. The centrifugal blower 7 is not represented here (see figure 1), whereas the figure then shows the supporting and positioning wheels 8, 8' of the side frame members 1 and 1', that operate the fertilizer proportioning units 10, which, for the sake of clarity, can be seen here only on the RT side as per item 10 along with the fertilizer reservoir 11; the wheels are followed by the inclined disc 12 (RT) and 12' (LF), which act as distributors of fertilizer on the ground strip (band) which is then tilled by the following hoeing units, the LF one of which is represented here under item 13' housed into the protective covering 14. The upper hub of the oscillating boot-shaped body 15 that holds the driving chain, is fixed to the omega-shaped beam section 17 and is motorized by the oleo-dynamic motor 16.

Adequate supports ahead of the side frame members 1, 1' hold detectors, which are not dealt with in this invention, represented here respectively by two tubular bars 42 (RT) and 42' (LF), supporting electric sensors 43 with whiskers, i.e. trunk contact detectors, arranged in two levels from the ground and suitable to warn (in case of clean sub-rows) about the presence of obstacles in each plant row.

Figure 3 shows in detail the inclined and diverging disc 12 working as a spreader of the fertilizer on the soil and fitted onto a small bar 44 of the side frame member 1 by means of a clamp; the same can therefore be easily replaced depending on the width of the ground strip tilled by the following hoeing unit 13.

For the sake of clarity though not being innovations, Fig 4 and 5 show two other parts of the device and precisely the first one the diagram of the drive by means of shaped shaft 9 composed of two extractable telescopic parts 47 and 48; the shaft rotates thanks to the conic couple 48 operated by the spurred wheel 8 which, thanks to the conic couple above 49, controls the shaft 51 of the fertilizer proportioning unit 10.

The second figure no. 5 represents fixed teeth as per item 52 ahead of the hoeing unit 13 suitable to scratch the ground, which can be used in case of dry soils without residues in order to facilitate the introduction of the hoes in the soil.

For easier understanding, the tables show the solution with motorization by means of oleo-dynamic motors applied to the single units; however, the other solutions indicated above are still valid, such as the mechanic or oleo-dynamic motorization of the central platform 20, the extensible transversal shaped shaft for the hoeing units 13 and the fertilizer spreader incorporating a spurred wheel 8 and a reservoir 11 with two proportioning units fitted onto the central platform 20. The obstacle detectors, the signal processing devices (schemes and components) and the inputs to the actuators are considered already existing devices or not dealt with in this invention and have therefore been neither described nor illustrated here.

In closing, the invention consists of a compact bilateral multi-function device fitted preferably to the lifting group of tractors and suitable to work on ground strips close to the foot of variably wide rows of vineyards, orchards and hedges. The device can temporarily vary its working width to avoid obstacles or damages to the plant stubs and trunks. The device is featured by a central platform equipped with transversally placed hydraulic jacks and is capable to support and position by means of standard connecting plates two side frame members equipped with several operating units, which might be variably composed; the working width of the same can vary thanks to the jacks controlled by the operator and/or by trunk proximity detectors, as well by a processing and control electronic cabinet.

## Claims

1. Compact bilateral multi-function agricultural device suitable to simultaneously carry out sub-row cleaning, fertilization or weed killing and hoeing operations having motorized units working on parallel ground strips (bands) close to rows of vineyards and orchards, said device being fitted onto the front, central or rear lifting group of a tractor, or other self-moving vehicles, **characterized in that** it is of variable width and is composed of a standard-type, as it is in common with other devices, central platform (20), incorporating opposite and parallel double-effect jacks (26), two platform heads holding, by means of standard-type plates (2), two longitudinal, preferably single-beam frames (side frame members) (1), each one laying on the ground by means of an adjustable level wheel (8) and supporting several lined-up units operating, i.e. a brushing unit (3), a centrifugal fan (7), a fertilizer or insect-killer proportioning unit (10) and a hoeing unit (13), adapted to carry out in a single row passing through the steps of cleaning the row foot, addition of products such as fertilizers or insect-killers plus relevant ground ploughing in and the simultaneous soil oxygenation with low depth operations.

2. Bilateral multi-function agricultural device as mentioned in claim 1 suitable to operate on ground strips (bands) of a pre-set width close to two adjacent rows, **characterized in that** each side frame member (1 , 1'), and therefore each side of the device, is equipped in a functional sequence with several operating units, even incorporating different motorizations (for ex. mechanic, oleo-dynamic or electric motorization), suitable to clean the ground from leaves, pruning residues and weeds by means of a rotating brush (3) having basically a horizontal axis and assisted by an electric fan (7) with an air flow blowing in a transversal direction with respect to the plant row, in order to remove the residues stuck onto the ground, followed by the free wheel (8), of the oriented or pivoting type, laying on the ground and adjustable in height, then by a diverging disc-shaped diffuser (12) that spreads on the pre-set soil strip the product coming from at least one reservoir (11) equipped with a mechanized proportioning device (10) and finally by a soil strip hoeing unit (13), in order to carry out all the above operations with a single adjustment and a single control.

3. Bilateral multi-function device according to the preceding claims, **characterized by** the possible different motorization of the various operating units: oleo-dynamic or electric motors for the brushing units (3), electric motors for the transversal blowers (7), oleo-dynamic motors or by mechanical transmission the hoeing units (13), spurred wheel (8) connected to the tractor moving forward and put in contact with the ground for the fertilizers or insect-killers proportioning device (10), in order to cope with the functional requirements of the different operating units.

4. Device according to the preceding claims, **characterized in that** the "standard" working width for a given planting and the "acceptable" deviations (limits) from the ideal line are memory stored or self-detected by sensors (43), whereas the temporary width variations to avoid misalignments or deviations of stubs and plants, or of the vehicle driving direction beyond the acceptable limits, are measured automatically by means of trunk proximity remote-sensors, preferably of the ultrasound type, placed ahead of the device and suitably set-up.

5. Device according to the preceding claims, wherein a row foot brushing unit (3) fitted onto each side frame member (1) is composed of a motorized disc fixed to the hub preferably with only one bolt (5) and having a basically horizontal rotation axis, that can be oriented preferably in a converging direction with respect to the vehicle moving forward.

6. Device according to claim 5 wherein the external part of the disc (3) is equipped with an adequate cylindrical band incorporating sets of flexible whips (23) transversally arranged in several rims or ranks in a continuous or discontinuous way, thus forming brushes, and fixed by external and easily replaceable rings.

7. Device according to the preceding claims, **characterized by** a centrifugal electric fan (7) placed ahead of / behind the brushing unit (3) and directed towards the plant row in order to help the brushing unit (3) in removing unwanted residues from the row foot.

8. Device according to the preceding claims, **characterized by** a fertilization unit with proportioning unit (10) and single reservoir (11) fitted onto the central platform (20) and driven, by means of a kinematic chain motion, by an oscillating spurred wheel (8) in contact with the ground.

9. Device according to claim 8, **characterized by** two fertilization units, each one having a small reservoir (11) and placed on a side frame member (1), preferably driven by an extractable transversal shaft (51), or operated directly by a chain wheel fitted onto each side frame member in order to start product delivery only during the tractor moving forward.

10. Device according to the preceding claims, wherein the hoeing unit (13) of each side frame member (1) is composed of a lower hoe-holding hub driven by a transmission included in a boot-shaped case (15) with limited oscillation and of an upper hub fixed to the side frame member (1).

11. Device according to claim 10, wherein a single oleo-dynamic motor controls a single T-shaped gear central reduction unit with the exits on an extractable duly shaped transversal shaft operating both hubs.

12. Device according to claim 11, wherein each upper hub is driven by its own hydraulic motor, so as to permit to have a variable working length, also while in operation, and to leave a plain ground surface slightly subject to evaporation phenomena.

13. Device according to the preceding claims, **characterized by** a balancing platform, thanks to at least one hydraulic jack (26), in order to temporarily increase/lower the load, though keeping at a constant height the level wheels, which are in a central position with respect to the side frame members (1).
